# EUROPÄISCHE PATENTSCHRIFT

(11) **EP 3 258 217 B1**
(45) Veröffentlichungstag und Bekanntmachung des Hinweises auf die Patenterteilung: **08.05.2019**
(21) Anmeldenummer: 17171472.8
(22) Anmeldetag: 17.05.2017
(51) Int. Cl.: G01D 5/14, F15B 15/28

(54) **SENSOR**
SENSOR
CAPTEUR

(30) Priorität: 15.06.2016 DE 102016110968
(43) Veröffentlichungstag der Anmeldung: 20.12.2017
(73) Patentinhaber: Sick AG, 79183 Waldkirch (DE)
(72) Erfinder: Bludau, Thomas, 79111 Denzlingen (DE)

(56) Entgegenhaltungen:
- EP-A1- 1 544 579
- EP-A2- 1 679 493
- DE-A1-102010 003 292
- DE-A1-102011 115 302

## Beschreibung

Die vorliegende Erfindung betrifft einen Sensor zur berührungslosen magnetischen Erfassung linearer Relativbewegungen eines Gebermagneten entlang einer Messstrecke mit mindestens einem Sensorelement.

In Pneumatikzylindern wird eine Kolbenposition meist über einen auf dem Kolben befestigten Gebermagneten bestimmt. Die Eigenschaften wie Ausrichtung, Magnetisierung, Remanenz oder Geometrie des Magneten können dabei variieren.

Die Bestimmung der Position des Magneten erfolgt dabei meist mit Positionssensoren, deren Baulänge in etwa ihrem Messbereich entspricht.

Für die Bestimmung einer Position eines Gebermagneten gibt es ein erstes Messverfahren, bei dem eine Zeile aus einer Vielzahl von Hallelementen entlang der Messstrecke verwendet wird. Die Hallelemente sind in einem festen Abstand positioniert und können jeweils eine radiale Komponente des Magnetfeldes in einem kleinen Bereich links und rechts des jeweiligen Hallelementmittelpunktes messen. Größere Messbereiche werden über eine größere Anzahl an Hallelementen erreicht. Bekannte Produkte sind z. B. die Produktfamilien MPS und MPA der Anmelderin.

Diese Messverfahren sind zwar hochpräzise, jedoch ist ein Nachteil, dass die Baulänge des Sensors immer dem erreichbaren Messbereich entsprechen muss. Außerdem müssen die einzelnen Hallelemente über eine relativ komplexe Ansteuerung selektiert werden und können auch nur auf Zylindern mit axial magnetisiertem Magneten betrieben werden. Insgesamt handelt es sich auch um eine recht teure Lösung, da viele Bauteile benötigt werden.

Bisher bekannte 3D-Hallelemente verfügen größtenteils über eine digitale Schnittstelle, über die ermittelte Messwerte einzelner Feldkomponenten übertragen werden. Diese Messwertübermittlung an einen nachgelagerten Mikrocontroller ist verhältnismäßig langsam. Da 3D-Hallelemente außerdem auch ein recht großes Signalrauschen aufweisen, ist eine schnelle und gleichzeitig genaue Messung der Magnetposition nicht möglich.

Die DE 10 2010 003 292 A1 betrifft eine Sensoranordnung zum Ermitteln einer Magnetisierungsrichtung eines Gebermagneten, wobei mindestens zwei Magnetfeldsensoren notwendig sind.

Die EP 1 679 493 A2 offenbart ein Verfahren zum Korrigieren einer aus Messwerten abgeleiteten Kennlinie eines magnetoresistiv ausgelegten Weg- oder Winkelsensors.

Die EP 1 544 579 A1 offenbart einen Winkelerfassungssensor, der ein magnetoresistives Element wie ein GMR-Element verwendet, und insbesondere einen Winkelerfassungssensor mit einer Phasenkompensationsfunktion.

Die DE 10 2011 115 302 A1 offenbart ein Verfahren zum berührungslosen Messen einer relativen Position mittels eines Hallsensors. Das Berechnen eines Positionssignals basiert auf einem Quotienten von zwei Magnetfeldkomponenten.

Eine Aufgabe der Erfindung besteht darin, ein Positionssignal bzw. ein Ausgangssignal bzw. eine Ausgangskennlinie des Sensors bereitzustellen, das über den gesamten Messbereich streng monoton ist. Es soll ein Sensor bereitgestellt werden, dessen Sensoraufbau es ermöglicht, eine Baulänge des Sensors viel kleiner als sein Messbereich auszubilden.

Weiter soll der Sensor eine hohe Positionsauflösung, eine hohe Messrate, eine hohe Störunterdrückung, eine möglichst lineare Kennlinie und/oder einen möglichst großen Messbereich aufweisen.

Außerdem soll der Sensor bei hoher Auflösung gleichzeitig eine hohe Schaltfrequenz, eine hohe Störunterdrückung und einen möglichst kleinen Linearitätsfehler in der Kennlinie aufweisen. Weiterhin soll der Sensor sowohl für Zylinder mit axial als auch mit diametral magnetisiertem Magnet eingesetzt werden können.

Die Aufgabe wird gemäß Anspruch 1 gelöst.

Gemäß der Erfindung kann mit nur einem einzigen Sensorelement ein monotones Positionssignal gebildet werden. Dadurch kann der Sensor an einer Vielzahl von unterschiedlichen Zylindern mit unterschiedlichen Längen mit Gebermagneten eingesetzt werden.

Das Sensorelement erfasst zwei senkrecht zueinander stehende Komponenten eines Magnetfeldes des Gebermagneten. Dabei werden die Komponenten über die gesamte Länge des Zylinders bzw. über den gesamten Messbereich erfasst. Dadurch kann das Sensorelement und der Sensor kürzer sein als die Messstrecke

Die axiale Komponente und die radiale Komponente bilden zwei unterschiedliche Signalverläufe entlang der Messstrecke, deren Kombination eine eindeutige Information liefert über die genaue Position des Gebermagneten.

Die Auswerteeinheit ist vorgesehen, die axiale Komponente und die radiale Komponente nach einer mathematischen Funktion auszuwerten. Die mathematische Funktion ist der ARCTAN aus dem Quotienten (radiale Komponente/axiale Komponente) oder der ARCTAN aus dem Quotienten (radiale Komponente/axiale Komponente).

Dadurch wird zunächst ein abschnittsweise monotones Positionssignal mit jeweils einem Wert eines Wertebereichs für jeweils eine Position entlang der Messstrecke des Gebermagneten gebildet. Jedoch weist dieses Signal bei einem ausreichend großen Kolbenhub bzw. bei einem ausreichend großen Messbereich noch Sprungstellen auf. Diese Sprünge im Ergebnis des Arcustangens resultieren aus der Limitierung des Wertebereiches von Pi/2 bis -Pi/2.

Um diese Limitierung des Arcustangens zu umgehen, muss das Ergebnis bzw. das Positionssignal in mindestens einem Bereich der Messstrecke mit einem konstanten Korrekturwert korrigiert wird, so dass ein monotones Positionssignal mit einem monotonen Wertebereich über die gesamte Messstrecke gebildet ist.

Gemäß der Erfindung ist die Auswerteeinheit ausgebildet, eine Korrektur der Werte des Positionssignals mit Hilfe einer Wahrheitstabelle vorzunehmen, wobei die Wahrheitstabelle konstante Korrekturwerte für jeden Bereich aufweist.

Sind beispielsweise vier Bereiche gebildet, wird beispielsweise das Positionssignal in einem ersten Bereich und einem vierten Bereich korrigiert. Sind beispielsweise sechs Bereiche gebildet, wird beispielsweise das Positionssignal in einem ersten und einem sechsten Bereich korrigiert. Die konstanten Korrekturwerte der Wahrheitstabelle sind beispielsweise die Werte Null, +Pi oder-Pi, bzw. vergleichbare Spannungswerte.

Im Vergleich zu einem axial magnetisierten Gebermagnet vertauschen sich bei einem diametral magnetisierten Magnet die Kennlinien der axialen und radialen Komponente. Nach dem Vertauschen der beiden Komponenten ergeben sich dann die gleichen Diagramme wie beim axial magnetisierten Magneten.

Gemäß der Erfindung kann der Gebermagnet beispielsweise axial oder diametral magnetisiert sein.

Der erfindungsgemäße Sensor ist im Vergleich zum Stand der Technik wesentlich kostengünstiger.

Gemäß einer bevorzugten Ausführung der Erfindung ist das Sensorelement ein Winkelsensor auf Basis einer TMR-Technologie. Der magnetische Tunnelwiderstand (englisch tunnel magnetoresistance, TMR) oder TMR-Effekt ist ein magnetoresistiver Effekt, der in magnetischen Tunnelkontakten (engl. magnetic tunnel junction, MTJ) auftritt. Dabei handelt es sich um ein Bauelement bestehend aus zwei Ferromagneten, die durch einen dünnen Isolator getrennt sind. Ist die isolierende Schicht dünn genug, typisch einige Nanometer, so können Elektronen zwischen den beiden Ferromagneten tunneln. Bei dem Winkelsensor sind zwei Bauelemente senkrecht zueinander angeordnet, um die radiale und die axiale Komponente des Magnetfeldes zu messen.

Das Signalrauschen des TMR-Winkelsensors ist sehr gering. Der TMR-Winkelsensor bietet auch bei sehr schwachen Feldern noch ausreichend Signal. Somit kann vor allem in den Randbereichen eine wesentlich höhere Auflösung generiert werden. Der TMR-Winkelsensor ist vor allem bei niedrigen Magnetfeldstärken sehr empfindlich, was sich ebenfalls positiv auf die Auflösung auswirkt. Der Winkelsensor auf Basis der TMR-Technologie hat aufgrund seines extrem hohen Brückenwiderstands eine Stromaufnahme lediglich vorteilhaft im Mikroamperebereich.

Außerdem ist der Signalhub des Winkelsensors nicht abhängig von der Magnetfeldstärke. Daher kann der Betrag einer Feldkomponente nicht genutzt werden, im Vergleich zu einem 3D-Hallsensor.

In Weiterbildung der Erfindung ist das Sensorelement ein integrierter Baustein mit mindestens einem Analogausgang. Die Auswerteeinheit ist in Weiterbildung der Erfindung ein Mikrocontroller der einen integrierten Analog-/Digitalwandler umfasst, wodurch das mindestens eine Analogsignal mit den Werten für die axiale Komponente und die radiale Komponente in der Auswerteeinheit digital verarbeitbar ist.

Dadurch ist eine sehr schnelle Signalverarbeitung der Werte für die axiale Komponente und die radiale Komponente gewährleistet. Aus diesem Geschwindigkeitsvorteil ergeben sich zwei weitere entscheidende Vorteile für die Performance des Sensors. Beispielsweise kann eine stärkere Mittelwertbildung der Signale erfolgen, was für eine höhere Störunempfindlichkeit sorgt. Gleichzeitig kann aber trotzdem noch eine höhere Schaltfrequenz erzielt werden, da der Geschwindigkeitsvorteil beim Auslesen des Analogsignals bzw. der Analogspannung enorm ist.

Gemäß einer bevorzugten Ausführungsform ist die Auswerteeinheit ausgebildet, die Messstrecke in mindestens vier Bereiche aufzuteilen, wobei die Grenzen der Bereiche, jeweils an den Sprungstellen des Wertebereichs des ARCTAN liegen und an der Stelle, an der das Positionssignal die größte Steigung aufweist.

Besonders bevorzugt ist die Auswerteeinheit ausgebildet, die Messstrecke in sechs Bereiche aufzuteilen, wobei zwei zusätzliche Grenzen der Bereiche zwischen den Sprungstellen des Wertebereiches des ARCTAN und der Stelle, an der das Positionssignal die größte Steigung aufweist, vorgesehen sind.

Durch die Bildung der Bereiche kann das Positionssignal in den einzelnen Bereichen jeweils einzeln analysiert werden und die Bereiche des Positionssignals jeweils einzeln korrigiert werden.

Gemäß der Erfindung ist die Auswerteeinheit ausgebildet, eine Steigung der Werte der axialen Komponente und/oder eine Steigung der Werte der radialen Komponente in jedem Bereich zu erfassen.

Dadurch kann eine Magnetpolung, nämlich eine negative Polung oder eine positive Polung des Gebermagneten bestimmt werden. Die Werte bzw. Messwerte der zwei Feldkomponenten, nämlich der axialen und radialen Feldkomponente allein führen ggf. nicht zu einem eindeutigen Ergebnis für alle Fälle in allen Bereichen. Die Zusatzinformation über die aktuelle Steigung der axialen und radialen Komponente bei sich bewegendem Gebermagnet führt zu einer eindeutigen Zuordnung.

Gemäß der Erfindung ist die Auswerteeinheit ausgebildet, den Betrag der radialen Komponente und den Betrag der axialen Komponente zu bilden und die Beträge zu subtrahieren, um ein Subtraktionsergebnis zu erhalten. Dadurch wird eine Hilfskennlinie gebildet, die teilweise linearsiert ist.

Gemäß der Erfindung sind die Werte der axialen Komponente, die Werte der radialen Komponente, die Steigung der axialen Komponente, die Steigung der radialen Komponente und das Subtraktionsergebnis jeweils mit einem unterschiedlichen Gewichtungsfaktor gewichtet, wobei der Gewichtungsfaktor insbesondere einer Zweierpotenz entspricht. Die Bewertung der einzelnen Bereiche erfolgt über eine binäre Gewichtung der einzelnen Parameter. Durch die Gewichtung können die Werte und die Steigungen, sowie das Subtraktionsergebnis rechnerisch voneinander unterschieden werden. Insbesondere können die Gewichtungsfaktoren digital einfach weiterverarbeitet werden in der Auswerteeinheit.

Gemäß der Erfindung ist die Auswerteeinheit ausgebildet, die Gewichtungsfaktoren der Werte der axialen Komponente, die Werte der radialen Komponente, die Steigung der axialen Komponente, die Steigung der radialen Komponente und das Subtraktionsergebnis jeweils eines Bereiches zu addieren, um jeweils eine Gewichtsfaktorensumme zu bilden. Dadurch werden Gewichtsfaktorensummen gebildet, wobei mehrere Gewichtsfaktorensummen in der Auswerteeinheit auswertbar sind, um eine Magnetisierung und/oder eine Polung des Gebermagneten zu detektieren bzw. zu erkennen.

Werden beispielsweise die Gewichtsfaktorensummen von vier unterschiedlichen Bereichen von der Auswerteeinheit analysiert, so kann die Magnetisierung bestimmt bzw. erkannt werden.

Gemäß der Erfindung ist die Auswerteeinheit ausgebildet, aus der Gewichtsfaktorensumme die Polung des Gebermagneten zu bestimmen.

Ist die Magnetisierung bekannt, reduziert sich die Bewertung nur noch auf die Polung. Beispielsweise kann durch eine Betrachtung der Gewichtsfaktorensummen von lediglich zwei mittleren Bereichen bereits die Polung bestimmt bzw. erkannt werden.

Gemäß der Erfindung ist die Auswerteeinheit aufgrund der ermittelten Gewichtsfaktorensummen ausgebildet, das Positionssignal in mindestens einem Bereich der Messstrecke mit einem konstanten Korrekturwert zu korrigieren, so dass ein monotones Positionssignal mit einem monotonen Wertebereich über die gesamte Messstrecke gebildet ist. Damit können verschiedene Gebermagnete mit axialer oder diametraler Magnetisierung bzw. der Polung automatisiert unterschieden und erkannt werden.

In Weiterbildung der Erfindung ist die Auswerteeinheit ausgebildet, eine Änderung der ersten Komponente und eine Änderung der zweiten Komponente auszuwerten, um einen Geschwindigkeitsvektor oder eine Änderungsrate zu bilden.

Bei Zylindern mit sehr starkem Magnetfeld und sehr geringem Abstand zwischen Magnet und Nutgrund kann es zu Mehrdeutigkeiten im Randbereich der Messstrecke bzw. des Messbereichs kommen, so dass es zu Pseudobereichen jenseits der äußeren Bereiche kommt. Diese weiteren Bereiche müssen unterdrückt werden, damit sie nicht zu einer fehlerhaften Erkennung führen. Diese Unterdrückung wird durch die Einführung eines weiteren Kriteriums, einer Änderungsrate oder einem Geschwindigkeitsvektor basierend auf den Änderungsraten der beiden Feldkomponenten, erreicht. Bei einer gleichförmigen Bewegung ist diese Änderungsrate oder dieser Geschwindigkeitsvektor in vier mittleren Bereichen größer als in den äußeren Bereichen, bzw. den Pseudobereichen. Zu jedem erkannten Bereich wird also die Änderungsrate oder der Geschwindigkeitsvektor aufgenommen und eine positive Erkennung kann nur erfolgen, wenn die vier erkannten Bereiche ungefähr dieselbe Änderungsrate oder denselben Geschwindigkeitsvektor aufweisen. Ist nur eine Änderungsrate oder ein Geschwindigkeitsvektor deutlich kleiner als die restlichen, so handelt es sich um eine Pseudoerkennung und diese wird verworfen.

Eine Erkennung ist auch nur mit den zwei mittleren Bereichen möglich, wenn auch hier die Änderungsrate oder der Geschwindigkeitsvektor als Kriterium mit einbezogen wird. Auch hier gilt, dass für eine gültige Erkennung eines signifikanten Bereichswechsels gleichzeitig auch die Änderungsraten oder die Geschwindigkeitsvektoren der beiden Bereiche annähernd gleich groß sein müssen. Ist eine Änderungsrate oder ein Geschwindigkeitsvektor deutlich größer als der andere, wurde die Mitte des Messbereichs nicht überfahren und es handelt sich um eine Pseudoerkennung.

In Weiterbildung der Erfindung ist die Auswerteeinheit ausgebildet, eine erste Ableitung von ARCTAN (radiale Komponente/axiale Komponente) oder eine erste Ableitung von ARCTAN (axiale Komponente/radiale Komponente) oder eine zweite Ableitung von ARCTAN (radiale Komponente/axiale Komponente) oder eine zweite Ableitung von ARCTAN (axiale Komponente/radiale Komponente) zu bilden, wodurch eine Polarität eines Magneten bei gegebener Magnetisierungsrichtung ermittelbar ist.

Wird die Magnetisierungsrichtung des Gebermagneten als gegeben vorausgesetzt, so kann die Polarität bei sich bewegendem Magnet direkt über die Steigung, also die erste Ableitung sowie die Krümmung, also die doppelte Ableitung des ARCTAN-Ergebnisses ermittelt werden. Voraussetzung dafür ist die Tatsache, dass das Ergebnis des ARCTAN nicht von der Polarität des Magneten abhängig ist.

Die Steigung beschreibt dabei die Bewegungsrichtung des Magneten, nämlich vorwärts oder rückwärts, die Krümmung die Steigungsänderung. Folgende Tabelle beschreibt die Zusammenhänge:

| Bewegungsrichtung: | Krümmung: | Position Gebermagnet: |
|---|---|---|
| Vorwärts | Rechts | Vor Sensorelement |
| Vorwärts | Links | Nach Sensorelement |
| Rückwärts | Rechts | Nach Sensorelement |
| Rückwärts | Links | Vor Sensorelement |

In Kombination mit der Information der radialen Feldkomponente kann somit eine eindeutige Zuordnung zu einem der sechs Bereiche erfolgen, ohne dass ein Bereichswechsel erfolgen muss.

In Weiterbildung der Erfindung ist die Auswerteeinheit ausgebildet, den Betrag der axialen Komponente und den Betrag der radialen Komponente zu bilden und die Beträge zu subtrahieren, um ein Subtraktionsergebnis zu erhalten, wodurch eine Polarität eines Magneten bei gegebener Magnetisierungsrichtung ermittelbar ist.

Bei einem axial magnetisierten Gebermagnet kann die Polarität nämlich dann anhand der axialen Feldkomponente ermittelt werden, wenn der Ausdruck beispielsweise einen Schwellenwert von 0,6 übersteigt. Dann entspricht die Magnetpolarität der Polarität der axialen Feldkomponente.
In Weiterbildung der Erfindung sind mindestens zwei Sensorelemente entlang der Messstrecke hintereinander angeordnet. Dadurch kann ein Messbereich vergrößert und eine Linearität verbessert werden. Dazu ist das zweite Sensorelement in einem fest definierten Abstand entlang der Achse des Messbereichs positioniert. Wenn beide Sensorelemente den betragsmäßig gleichen Ergebniswert, allerdings mit umgekehrtem Vorzeichen nach der Berechnung des Arcustangens liefern, befindet sich der Gebermagnet genau in der Mitte zwischen den beiden Sensorelementen. Dieser Wert kann als Indikator für die Krümmung der Kennlinie eines einzelnen Sensorelements genutzt werden und somit beispielsweise die Koeffizienten einer Polynom-Ausgleichsfunktion fünften Grades angepasst werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Sensor zur berührungslosen magnetischen Erfassung linearer Relativbewegung eines insbesondere axial magnetisierten Gebermagneten entlang einer Messstrecke;
- Figur 2: ein Diagramm mit Kennlinien der zwei Feldkomponenten eines axial magnetisierten Gebermagneten mit positiver Polung;
- Figur 3: ein Diagramm mit Kennlinien der zwei Feldkomponenten eines axial magnetisierten Gebermagneten mit negativer Polung;
- Figur 4: eine Wahrheitstabelle mit konstanten Korrekturwerten für jeden Bereich;
- Figur 5: eine Tabelle mit unterschiedlichen Gewichtungsfaktoren der axialen Komponente, der radialen Komponente, der Steigung der axialen Komponente, der Steigung der radialen Komponente und des Subtraktionsergebnisses;
- Figur 6: verschiedene Gewichtsfaktorensummen für verschiedene Bereiche und unterschiedliche Gebermagnete;
- Figur 7: jeweils in Figur 6 fehlende Gewichtsfaktorensummen;
- Figur 8: jeweils Gewichtsfaktorensummen von vier unterschiedlichen Bereichen, welche von der Auswerteeinheit analysiert werden;
- Figur 9: jeweils Gewichtungsfaktoren der Werte der axialen Komponente, der Werte der radialen Komponente, der Steigung der axialen Komponente und der Steigung der radialen Komponente, sowie die Gewichtsfaktorensummen;
- Figur 10: ein in zwei Bereichen korrigiertes Positionssignal der Messstrecke mit zwei konstanten Korrekturwerten;
- Figur 11: ein Sensor mit zwei Sensorelementen, die entlang der Messstrecke hintereinander angeordnet sind.

In den nachfolgenden Figuren sind identische Teile mit identischen Bezugszeichen versehen.

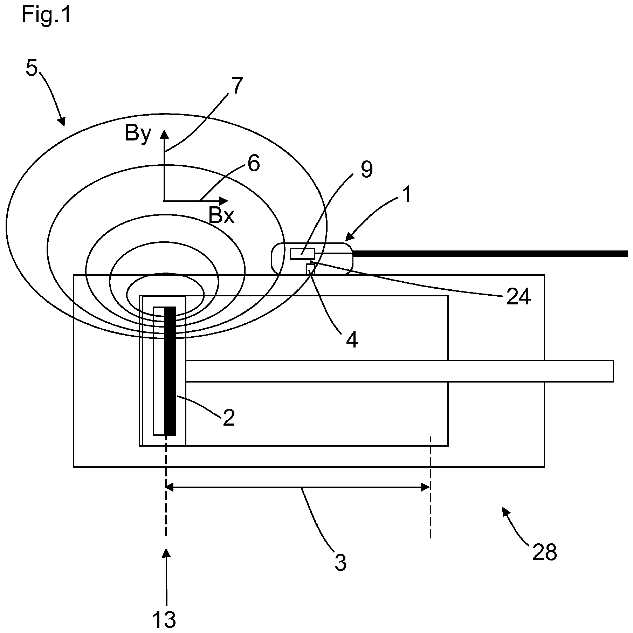

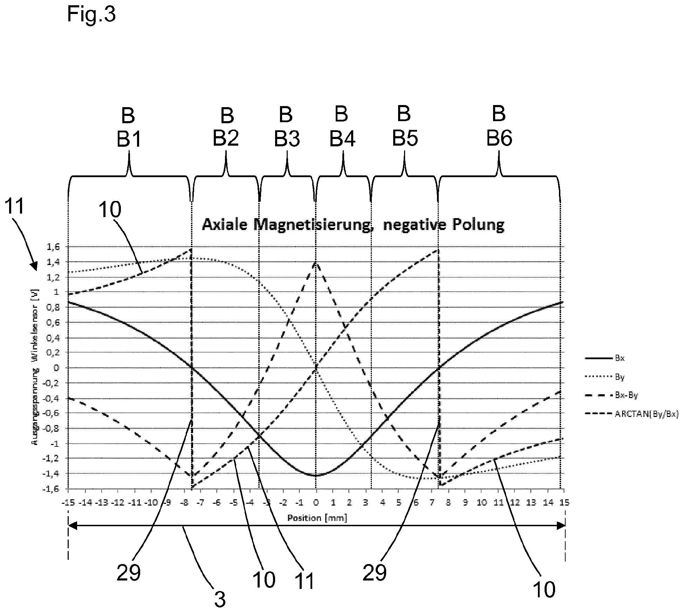

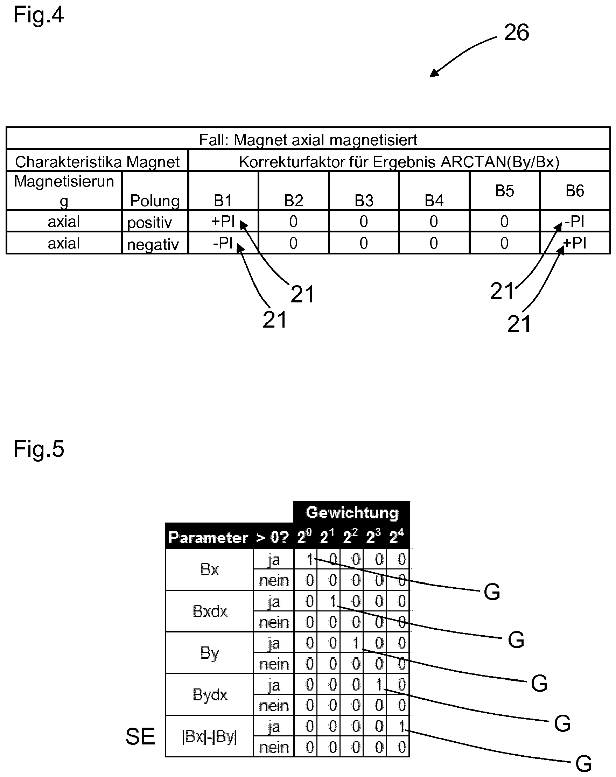

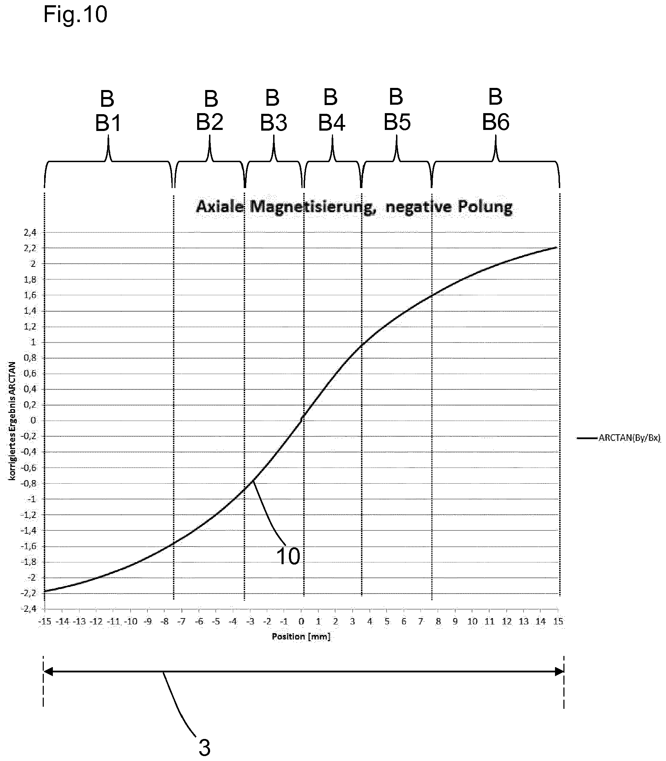

Figur 1 zeigt einen Sensor 1 zur berührungslosen magnetischen Erfassung linearer Relativbewegung eines insbesondere axial magnetisierten Gebermagneten 2 entlang einer Messstrecke 3 mit mindestens einem Sensorelement 4, wobei das Sensorelement 4 zwei senkrecht zueinander stehende Komponenten eines Magnetfeldes 5 des Gebermagneten 2 erfasst, wobei das Sensorelement 4 und der Sensor 1 kürzer sind als die Messstrecke 3, wobei eine erste Komponente 6 eine axiale Komponente Bx ist, wobei eine zweite Komponente 7 eine radiale Komponente By ist, wobei eine Auswerteeinheit 9 vorgesehen ist, wobei die axiale Komponente Bx und die radiale Komponente By in der Auswerteeinheit 9 nach einer mathematischen Funktion ausgewertet werden, wobei die mathematische Funktion der ARCTAN (radiale Komponente By/axiale Komponente Bx) oder der ARCTAN (axiale Komponente Bx/radiale Komponente By) ist, wodurch gemäß Figur 3 ein abschnittsweise monotones Positionssignal 10 mit jeweils einem Wert 11 eines Wertebereichs 12 für jeweils eine Position 13 entlang der Messstrecke 3 des Gebermagneten 2 gebildet ist, wobei das Positionssignal 10 in mindestens einem Bereich der Messstrecke 3 mit einem konstanten Korrekturwert 21 korrigiert wird, gemäß Figur 4 und Figur 10, so dass ein monotones Positionssignal 10 mit einem monotonen Wertebereich über die gesamte Messstrecke 3 gebildet ist.

Das Sensorelement 4 erfasst zwei senkrecht zueinander stehende Komponenten eines Magnetfeldes 5 des Gebermagneten 2. Dabei werden die Komponenten über die gesamte Länge des Zylinders 28 bzw. über die gesamte Messstrecke 3 erfasst. Dadurch kann das Sensorelement 4 und der Sensor 1 kürzer sein als die Messstrecke 3. Weiter kann der Sensor an einer beliebigen Stelle entlang der Messstrecke positioniert werden.

Die axiale Komponente Bx und die radiale Komponente By bilden zwei unterschiedliche Signalverläufe entlang der Messstrecke 3, deren Kombination eine eindeutige Information liefern über die genaue Position 13 des Gebermagneten 2.

Die Auswerteeinheit 9 ist vorgesehen, die axiale Komponente Bx und die radiale Komponente By nach einer mathematischen Funktion auszuwerten. Die mathematische Funktion ist der ARCTAN aus dem Quotienten (radiale Komponente By/axiale Komponente Bx) oder der ARCTAN aus dem Quotienten (axiale Komponente Bx/radiale Komponente By).

Gemäß Figur 1 ist das Sensorelement 4 ein Winkelsensor auf Basis einer TMR-Technologie. Bei dem Winkelsensor sind zwei Bauelemente senkrecht zueinander angeordnet, um die radiale Komponente By und die axiale Komponente Bx des Magnetfeldes 5 zu messen.

Gemäß Figur 1 ist das Sensorelement 4 ein integrierter Baustein mit mindestens einem Analogausgang 24. Die Auswerteeinheit 9 ist beispielsweise ein Mikrocontroller, der einen integrierten Analog-/Digitalwandler umfasst, wodurch das mindestens eine Analogsignal mit den Werten für die axiale Komponente Bx und die radiale Komponente By in der Auswerteeinheit 9 digital verarbeitbar ist.

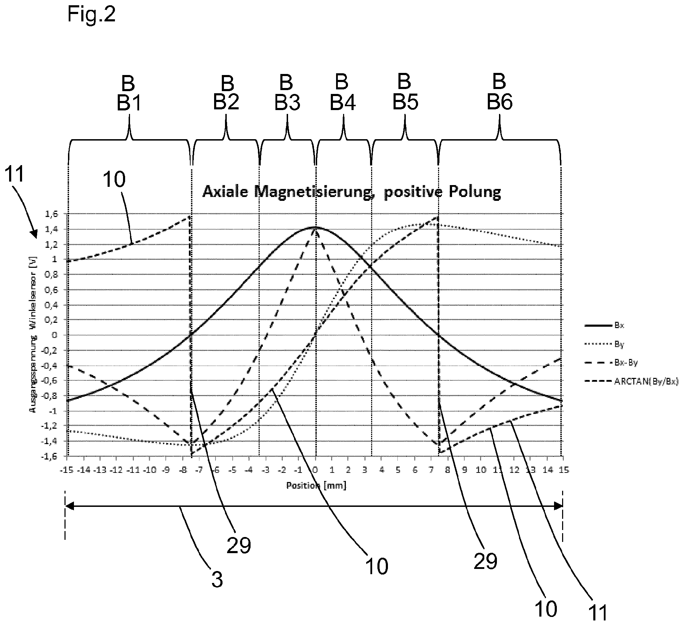

In dem Diagramm gemäß Figur 2 sind die Kennlinien der zwei Feldkomponenten eines axial magnetisierten Gebermagneten mit positiver Polung dargestellt. Das Positionssignal 10 weist zwei Sprungstellen 29 auf.

In dem Diagramm gemäß Figur 3 sind die Kennlinien der zwei Feldkomponenten eines axial magnetisierten Gebermagneten mit negativer Polung dargestellt. Jedoch kann der Gebermagnet beispielsweise axial oder diametral magnetisiert sein. Auch hier weist das Positionssignal 10 zwei Sprungstellen 29 auf.

Dadurch wird gemäß Figur 3 zunächst ein abschnittsweise monotones Positionssignal 10 mit jeweils einem Wert eines Wertebereichs für jeweils eine Position entlang der Messstrecke des Gebermagneten gebildet. Jedoch weist dieses Signal, bei einem ausreichend großen Kolbenhub bzw. bei einem ausreichend großen Messbereich noch die Sprungstellen 29 auf. Diese Sprungstellen 29 im Ergebnis des Arcustangens resultieren aus der Limitierung des Wertebereiches von Pi/2 bis -Pi/2.

Gemäß Figur 2 und Figur 3 ist die Auswerteeinheit ausgebildet die Messstrecke 3 in mindestens vier Bereiche B aufzuteilen, wobei die Grenzen der Bereiche B jeweils an den Sprungstellen 29 des Wertebereichs des ARCTAN liegen und an der Stelle, an der das Positionssignal 10 die größte Steigung aufweist.

Die Auswerteeinheit 9 ist ausgebildet, die Messstrecke 3 in sechs Bereiche B, nämlich B1 bis B6 aufzuteilen, wobei zwei zusätzliche Grenzen der Bereiche B zwischen den Sprungstellen 29 des Wertebereiches des ARCTAN und der Stelle, an der das Positionssignal 10 die größte Steigung aufweist, liegen.

Durch die Bildung der Bereiche B1 bis B6 kann das Positionssignal 10 in den einzelnen Bereichen B jeweils einzeln analysiert werden und die Bereiche B des Positionssignals 10 jeweils einzeln korrigiert werden.

Um diese Limitierung des Arcustangens zu umgehen, muss das Ergebnis bzw. das Positionssignal 10 in den Bereichen B1 und B6 der Messstrecke 3 mit einem konstanten Korrekturwert 21 korrigiert werden, gemäß Figur 4, so dass ein monotones Positionssignal 10 mit einem monotonen Wertebereich über die gesamte Messstrecke 3 gebildet ist, wie in Figur 10 dargestellt.

Gemäß Figur 4 ist die Auswerteeinheit ausgebildet, eine Korrektur der Werte des Positionssignals mit Hilfe einer Wahrheitstabelle 26 vorzunehmen, wobei die Wahrheitstabelle 26 konstante Korrekturwerte 21, nämlich 0 bzw. Null, +Pi und -Pi für jeden Bereich B1 bis B6 aufweist.

Sind beispielsweise vier Bereiche gebildet, wird beispielsweise das Positionssignal in einem ersten Bereich und einem vierten Bereich korrigiert. Sind beispielsweise gemäß Figur 4 sechs Bereiche B1 bis B6 gebildet, wird beispielsweise das Positionssignal in einem ersten Bereich B1 und einem sechsten Bereich B6 korrigiert. Die konstanten Korrekturwerte 21 der Wahrheitstabelle 26 sind beispielsweise die Werte +Pi oder-Pi, bzw. vergleichbare Spannungswerte.

Im Vergleich zu einem axial magnetisiertem Gebermagnet vertauschen sich bei einem diametral magnetisiertem Magnet die Kennlinien der axialen und radialen Komponente. Nach dem Vertauschen der beiden Komponenten ergeben sich dann die gleichen Diagramme wie beim axial magnetisierten Magneten.

Gemäß Figur 3 ist die Auswerteeinheit ausgebildet, eine Steigung der Werte der axialen Komponente und/oder eine Steigung der Werte der radialen Komponente in jedem Bereich B1 bis B6 zu erfassen.

Dadurch kann eine Magnetpolung, nämlich eine negative Polung oder eine positive Polung, des Gebermagneten bestimmt werden. Die Werte bzw. Messwerte der zwei Feldkomponenten, nämlich der axialen Komponente Bx und radialen Komponente By allein führen ggf. nicht zu einem eindeutigen Ergebnis für alle Fälle in allen Bereichen B1 bis B6. Die Zusatzinformation über die aktuelle Steigung der axialen Komponente Bx und radialen Komponente By bei sich bewegendem Gebermagnet führt zu einer eindeutigen Zuordnung.

Weiter ist die Auswerteeinheit ausgebildet, den Betrag der radialen Komponente und den Betrag der axialen Komponente zu bilden und die Beträge zu subtrahieren, um ein Subtraktionsergebnis zu erhalten. Dadurch wird eine Hilfskennlinie gebildet, die teilweise linearisiert ist.

Gemäß Figur 5 sind die Werte der axialen Komponente Bx, die Werte der radialen Komponente By, die Steigung der axialen Komponente Bxdx, die Steigung der radialen Komponente Bydx und das Subtraktionsergebnis SE nämlich SE = |Bx|-|By| jeweils mit einem unterschiedlichen Gewichtungsfaktor G gewichtet, wobei der Gewichtungsfaktor G insbesondere einer Zweierpotenz entspricht. Die Bewertung der einzelnen Bereiche erfolgt über eine binäre Gewichtung der einzelnen Parameter. Durch die Gewichtung können die Werte und die Steigungen, sowie das Subtraktionsergebnis SE rechnerisch voneinander unterschieden werden. Insbesondere können die Gewichtungsfaktoren G digital einfach weiterverarbeitet werden in der Auswerteeinheit.

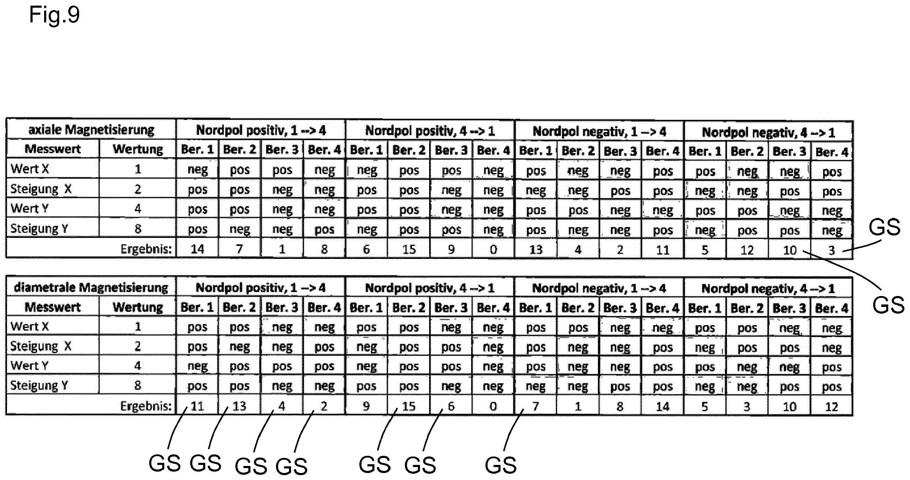

Gemäß Figur 9 ist die Auswerteeinheit ausgebildet, die Gewichtungsfaktoren der Werte X der axialen Komponente, die Werte Y der radialen Komponente, die Steigung der axialen Komponente, die Steigung der radialen Komponente und beispielsweise das Subtraktionsergebnis, welches in Figur 9 nicht dargestellt ist, jeweils eines Bereiches zu addieren, um jeweils eine Gewichtsfaktorensumme GS zu bilden.

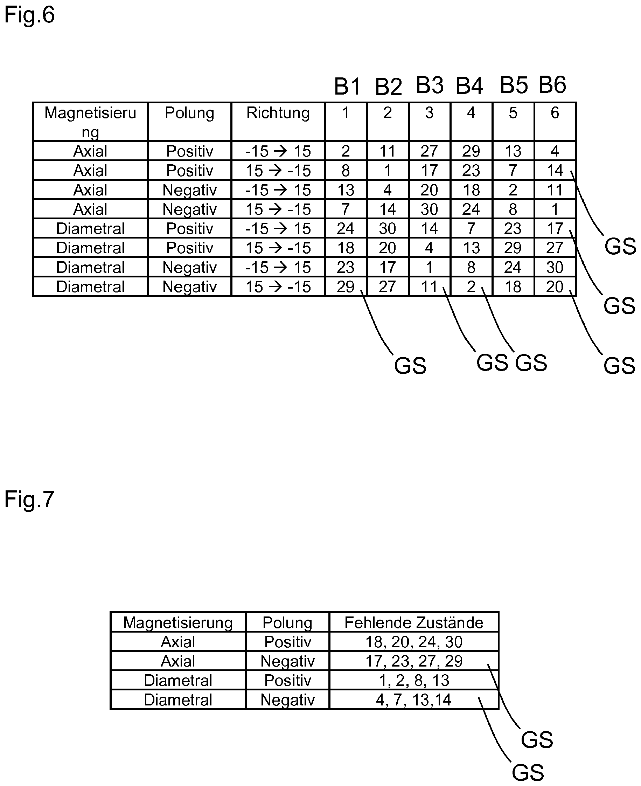

Dadurch werden Gewichtsfaktorensummen GS gebildet, wobei mehrere Gewichtsfaktorensummen GS gemäß Figur 6 in der Auswerteeinheit auswertbar sind, um eine Magnetisierung und/oder eine Polung des Gebermagneten zu detektieren bzw. zu erkennen.

Gemäß Figur 7 sind die in Figur 6 fehlenden Gewichtsfaktorensummen GS dargestellt.

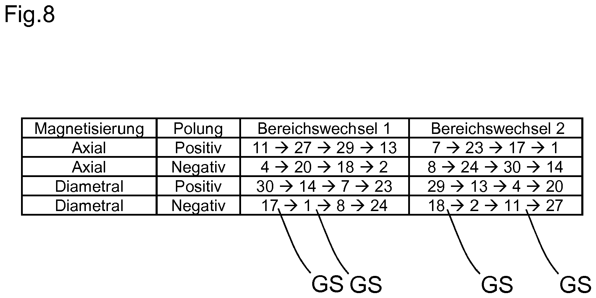

Werden beispielsweise gemäß Figur 8 die Gewichtsfaktorensummen GS von vier unterschiedlichen Bereichen von der Auswerteeinheit analysiert, so kann die Magnetisierung bestimmt bzw. erkannt werden.

Gemäß Figur 6 ist die Auswerteeinheit ausgebildet, aus den Gewichtsfaktorensummen GS die Polung des Gebermagneten zu bestimmen.

Ist die Magnetisierung bekannt, reduziert sich die Bewertung nur noch auf die Polung. Beispielsweise kann durch eine Betrachtung der Gewichtsfaktorensummen GS von lediglich zwei Bereichen, nämlich dem Bereich B3 und dem Bereich B4 gemäß Figur 6 bereits die Polung bestimmt bzw. erkannt werden.

Gemäß Figur 10 ist die Auswerteeinheit aufgrund der ermittelten Gewichtsfaktorensummen ausgebildet, das Positionssignal 10 in mindestens einem Bereich, nämlich den Bereichen B1 und B6 der Messstrecke 3 mit einem konstanten Korrekturwert zu korrigieren, so dass ein monotones Positionssignal 10 mit einem monotonen Wertebereich über die gesamte Messstrecke 3 gebildet ist.

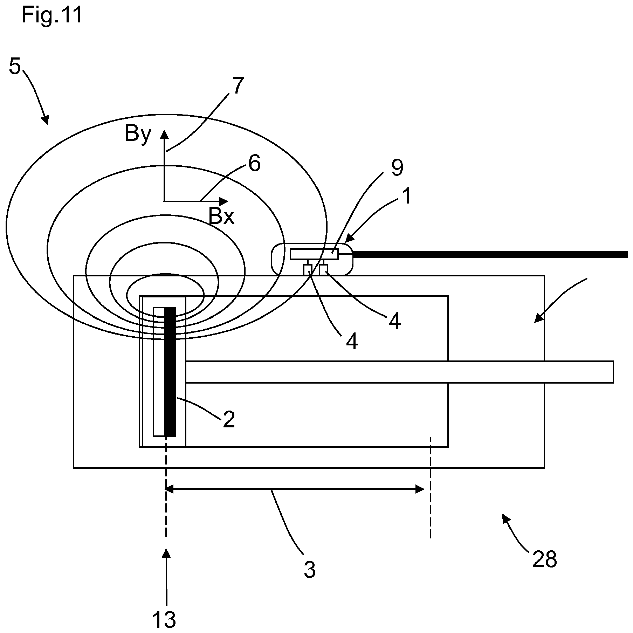

Gemäß Figur 11 sind mindestens zwei Sensorelemente 4 entlang der Messstrecke 3 hintereinander angeordnet. Dadurch kann ein Messbereich vergrößert und eine Linearität verbessert werden. Dazu ist das zweite Sensorelement 4 in einem fest definierten Abstand zu dem ersten Sensorelement 4 entlang der Achse des Messbereichs positioniert. Wenn beide Sensorelemente 4 den betragsmäßig gleichen Ergebniswert, allerdings mit umgekehrtem Vorzeichen nach der Berechnung des Arcustangens, liefern, befindet sich der Gebermagnet 2 genau in der Mitte zwischen den beiden Sensorelementen 4. Dieser Wert kann als Indikator für die Krümmung der Kennlinie eines einzelnen Sensorelements 4 genutzt werden und somit beispielsweise die Koeffizienten einer Polynom-Ausgleichsfunktion fünften Grades angepasst werden.

Bezugszeichen:
1 Sensor
2 Gebermagnet
3 Messstrecke
4 Sensorelement
5 Magnetfeld
6 erste Komponente
Bx axiale Komponente
7 zweite Komponente
By radiale Komponente
9 Auswerteeinheit
10 Positionssignal
11 Wert
12 Wertebereiches
13 Position
B, B1, B2, B3, B4, B5, B6 Bereiche, Bereich
21 konstanter Korrekturwert
24 Analogausgang
26 Wahrheitstabelle
28 Zylinder
29 Sprungstellen
|Bx| Betrag der axialen Komponente
|By| Betrag der radialen Komponente
SE Subtraktionsergebnis
X Wert der axialen Komponente
Y Wert der radialen Komponente
Bxdx Steigung der axialen Komponente
Bydx Steigung der radialen Komponente
G Gewichtungsfaktoren
GS Gewichtsfaktorensumme

## Patentansprüche

1. Sensor zur berührungslosen magnetischen Erfassung linearer Relativbewegung eines Gebermagneten (2) entlang einer Messstrecke (3) mit mindestens einem Sensorelement (4), wobei das Sensorelement (4) zwei senkrecht zueinander stehende Komponenten (6, 7) eines Magnetfeldes (5) des Gebermagneten erfasst,
wobei das Sensorelement (4) und der Sensor (1) kürzer sind als die Messstrecke (3),
wobei eine erste Komponente (6) eine axiale Komponente (Bx) ist,
wobei eine zweite Komponente (7) eine radiale Komponente (By) ist,
wobei eine Auswerteeinheit (9) vorgesehen ist,
wobei die axiale Komponente (Bx) und die radiale Komponente (By) in der Auswerteeinheit (9) nach einer mathematischen Funktion auswertbar sind, wobei die mathematische Funktion der ARCTAN (radiale Komponente/axiale Komponente) oder ARCTAN (axiale Komponente/radiale Komponente) ist, wodurch ein abschnittsweise monotones Positionssignal (10) mit jeweils einem Wert (11) eines Wertebereichs (12) für jeweils eine Position (13) entlang der Messstrecke (3) des Gebermagneten (2) gebildet ist,
wobei
die Auswerteeinheit ausgebildet ist, das Positionssignal (10) in mindestens einem Bereich (14) der Messstrecke (3) mit einem konstanten Korrekturwert (21) zu korrigieren, so dass ein monotones Positionssignal (10) mit einem monotonen Wertebereich (12) über die gesamte Messstrecke (3) gebildet ist, wobei die Auswerteeinheit (9) ausgebildet ist, eine Korrektur der Werte (11) des Positionssignals (10) mit Hilfe einer Wahrheitstabelle (26) vorzunehmen, wobei die Wahrheitstabelle (26) konstante Korrekturwerte (21) für jeden Bereich aufweist, **dadurch gekennzeichnet, dass** die Auswerteeinheit (9) ausgebildet ist, den Betrag der radialen Komponente (|By|) und den Betrag der axialen Komponente (|Bx|) zu bilden und die Beträge (|By|, |Bx|) zu subtrahieren, um ein Subtraktionsergebnis (SE) zu erhalten,
wobei die Werte (X) der axialen Komponente (Bx), die Werte (Y) der radialen Komponente (By), die Steigung (Bxdx) der axialen Komponente (Bx), die Steigung (Bydx) der radialen Komponente (By) und das Subtraktionsergebnis (SE) jeweils mit einem unterschiedlichen Gewichtungsfaktor (G) gewichtet werden, wobei der Gewichtungsfaktor (G) insbesondere einer Zweierpotenz entspricht, wobei die Auswerteeinheit (9) ausgebildet ist, die Gewichtungsfaktoren (G) der Werte (X) der axialen Komponente (Bx), die Werte (Y) der radialen Komponente (By), die Steigung (Bxdx) der axialen Komponente (Bx), die Steigung (Bydx) der radialen Komponente (By) und das Subtraktionsergebnis (SE) jeweils eines Bereiches (14) zu addieren, um jeweils eine Gewichtsfaktorensumme (GS) zu bilden,
wobei die Auswerteeinheit (9) ausgebildet ist, aus der Gewichtsfaktorensumme (GS) die Polung (P) des Gebermagneten (2) zu bestimmen,
wobei die Auswerteeinheit (9) aufgrund der ermittelten Gewichtsfaktorensummen (GS) ausgebildet ist, das Positionssignal (10) in mindestens einem Bereich (14) der Messstrecke (3) mit einem konstanten Korrekturwert (21) zu korrigieren, so dass ein monotones Positionssignal (10) mit einem monotonen Wertebereich (12) über die gesamte Messstrecke (3) gebildet ist.

2. Sensor nach Anspruch 1, **dadurch gekennzeichnet, dass** das Sensorelement (4) ein Winkelsensor auf Basis einer TMR-Technologie ist.

3. Sensor nach mindestens einem der vorhergehenden Ansprüche, **dadurch gekennzeichnet, dass** das Sensorelement (4) ein integrierter Baustein mit mindestens einem Analogausgang (24) ist und die Auswerteeinheit (9) ein Mikrocontroller ist, der einen integrierten Analog-/Digitalwandler umfasst, wodurch das mindestens eine Analogsignal an dem Analogausgang (24) mit den Werten für die axiale Komponente und die radiale Komponente in der Auswerteeinheit (9) digital verarbeitbar ist.

4. Sensor nach mindestens einem der vorhergehenden Ansprüche, **dadurch gekennzeichnet, dass** die Auswerteeinheit (9) ausgebildet ist, die Messstrecke in mindestens vier Bereiche (14) aufzuteilen, wobei die Grenzen (25) der Bereiche, jeweils an den Sprungstellen des Wertebereichs des ARCTAN liegen und an der Stelle, an der das Positionssignal (10) die größte Steigung aufweist.

5. Sensor nach mindestens einem der vorhergehenden Ansprüche, **dadurch gekennzeichnet, dass** die Auswerteeinheit (9) ausgebildet ist, eine Steigung der Werte der axialen Komponente (Bx) und/oder eine Steigung der Werte der radialen Komponente (By) in jedem Bereich zu erfassen.

6. Sensor nach mindestens einem der vorhergehenden Ansprüche, **dadurch gekennzeichnet, dass** die Auswerteeinheit ausgebildet ist, eine Änderung der ersten Komponente und eine Änderung der zweiten Komponente auszuwerten, um einen Geschwindigkeitsvektor oder eine Änderungsrate zu bilden.

7. Sensor nach mindestens einem der vorhergehenden Ansprüche, **dadurch gekennzeichnet, dass** die Auswerteeinheit ausgebildet ist, eine erste Ableitung von ARCTAN (radiale Komponente/axiale Komponente) oder eine erste Ableitung von ARCTAN (axiale Komponente/radiale Komponente) oder eine zweite Ableitung von ARCTAN (radiale Komponente/axiale Komponente) oder eine zweite Ableitung von ARCTAN (axiale Komponente/radiale Komponente) zu bilden, wodurch eine Polarität eines Magneten bei gegebener Magnetisierungsrichtung ermittelbar ist.

8. Sensor nach mindestens einem der vorhergehenden Ansprüche, **dadurch gekennzeichnet, dass** die Auswerteeinheit ausgebildet ist, den Betrag der axialen Komponente (|Bx|) und den Betrag der radialen Komponente (|By|) zu bilden und die Beträge (|Bx| - |By|) zu subtrahieren, um ein Subtraktionsergebnis (SE) zu erhalten, wodurch eine Polarität eines Magneten bei gegebener Magnetisierungsrichtung ermittelbar ist.

9. Sensor nach mindestens einem der vorhergehenden Ansprüche, **dadurch gekennzeichnet, dass** mindestens zwei Sensorelemente (4) entlang der Messstrecke (3) hintereinander angeordnet sind.

## Claims

1. A sensor for the contactless magnetic detection of a linear relative movement of a transducer magnet (2) along a measurement path (3) comprising at least one sensor element (4), wherein the sensor element (4) detects two components (6, 7) of a magnetic field (5) of the transducer magnet that are perpendicular to one another;
wherein the sensor element (4) and the sensor (1) are shorter than the measurement path (3);
wherein a first component (6) is an axial component (Bx);
wherein a second component (7) is a radial component (By), wherein an evaluation unit (9) is provided;
wherein the axial component (Bx) and the radial component (By) can be evaluated in the evaluation unit (9) in accordance with a mathematical function, with the mathematical function being the ARCTAN (radial component/axial component) or ARCTAN (axial component/radial component), whereby a sectionally monotonous position signal (10) is formed having a respective value (11) of a value range (12) for a respective position (13) along the measurement path (3) of the transducer component (2);
wherein
the evaluation unit is configured to correct the position signal (10) in at least one region (14) of the measurement path (3) by a constant correction value (21) so that a monotonous position signal (10) is formed having a monotonous value range (12) over the total measurement path (3); and wherein the evaluation unit (9) is configured to carry out a correction of the values (11) of the position signal (10) with the aid of a truth table (26), with the truth table (26) having constant correction values (21) for every region, **characterized in that** the evaluation unit (9) is configured to form the amount of the radial component (|By|) and the amount of the axial component (|Bx|) and to subtract the amounts (|By|, |Bx|) to obtain a subtraction result (SE), with the values (X) of the axial component (Bx), the values (Y) of the radial component (By), the gradient (Bxdx) of the axial component (Bx), the gradient (Bydx) of the radial component (By), and the subtraction result (SE) being respectively weighted with a different weighting factor (G), with the weighting factor (G) in particular corresponding to a power of two; with the evaluation unit (9) being configured to add the weighting factors (G) of the values (X) of the axial component (Bx), the values (Y) of the radial component (By), the gradient (Bxdx) of the axial component (Bx), the gradient (Bydx) of the radial component (By), and the subtraction result (SE) of a respective region (14) to form a respective weight factor sum (GS);
with the evaluation unit (9) being configured to determine the polarity (P) of the transducer magnet (2) from the weight factor sum (GS); and
with the evaluation unit (9) being configured on the basis of the determined weight factor sums (GS) to correct the position signal (10) in at least one region (14) of the measurement path (3) by a constant correction value (21) so that a monotonous position signal (10) having a monotonous value range (12) is formed over the total measurement path (3).

2. A sensor in accordance with claim 1, **characterized in that** the sensor element (4) is an angle sensor on the basis of TMR technology.

3. A sensor in accordance with at least one of the preceding claims, **characterized in that** the sensor element (4) is an integrated module having at least one analog output (24); and **in that** the evaluation unit (9) is a microcontroller that comprises an analog to digital converter, whereby the at least one analog signal is digitally processable at the analog output (24) in the evaluation unit (9) using the values for the axial component and the radial component.

4. A sensor in accordance with at least one of the preceding claims, **characterized in that** the evaluation unit (9) is configured to divide the measurement path into at least four regions (14), with the boundaries (25) of the regions each being disposed at the jump discontinuities of the value region of the ARCTAN and at the point at which the position signal (10) has the greatest gradient.

5. A sensor in accordance with at least one of the preceding claims, **characterized in that** the evaluation unit (9) is configured to detect a gradient of the values of the axial component (Bx) and/or a gradient of the values of the radial component (By) in each region.

6. A sensor in accordance with at least one of the preceding claims, **characterized in that** the evaluation unit is configured to evaluate a change of the first component and a change of the second component to form a velocity vector or a rate of change.

7. A sensor in accordance with at least one of the preceding claims, **characterized in that** the evaluation unit is configured to form a first derivation of ARCTAN (radial component/axial component) or a first derivation of ARCTAN (axial component/radial component) or a second derivation of ARCTAN (radial component/axial component) or a second derivation of ARCTAN (axial component/radial component), whereby a polarity of a magnet can be determined with a given direction of magnetization.

8. A sensor in accordance with at least one of the preceding claims, **characterized in that** the evaluation unit is configured to form the amount of the axial component (|Bx|) and the amount of the radial component (|By|) and to subtract the amounts (|Bx|) - (|By|) to obtain a subtraction result (SE), whereby a polarity of a magnet can be determined with a given direction of magnetization.

9. A sensor in accordance with at least one of the preceding claims, **characterized in that** at least two sensor elements (4) are arranged behind one another along the measurement path (3).

## Revendications

1. Capteur pour la détection magnétique sans contact physique d'un mouvement relatif linéaire d'un aimant transmetteur (2) le long d'un trajet de mesure (3), comportant au moins un élément capteur (4), l'élément capteur (4) détectant deux composantes (6, 7) perpendiculaires l'une à l'autre d'un champ magnétique (5) de l'aimant transmetteur,
dans lequel
l'élément capteur (4) et le capteur (1) sont plus courts que le trajet de mesure (3),
une première composante (6) est une composante axiale (Bx),
une seconde composante (7) est une composante radiale (By),
il est prévu une unité d'évaluation (9),
la composante axiale (Bx) et la composante radiale (By) sont susceptibles d'être évaluées dans l'unité d'évaluation (9) selon une fonction mathématique,
la fonction mathématique étant l'ARCTAN (composante radiale/composante axiale) ou l'ARCTAN (composante axiale/composante radiale), moyennant quoi un signal de position (10) localement monotone est formé avec une valeur respective (11) d'une plage de valeurs (12) pour une position respective (13) le long du trajet de mesure (3) de l'aimant transmetteur (2),
l'unité d'évaluation est réalisée pour corriger par une valeur de correction constante (21) le signal de position (10) dans au moins une zone (14) du trajet de mesure (3), de sorte qu'un signal de position monotone (10) est formé avec une plage de valeurs monotone (12) sur tout le trajet de mesure (3),
l'unité d'évaluation (9) est réalisée pour procéder à une correction des valeurs (11) du signal de position (10) à l'aide d'une table de vérité (26),
la table de vérité (26) présente des valeurs de correction constantes (21) pour chaque zone,
**caractérisée en ce que**
l'unité d'évaluation (9) est réalisée pour former le montant de la composante radiale (|By|) et le montant de la composante axiale (|Bx|) et pour soustraire les montants (|By|, |Bx|) pour obtenir un résultat de soustraction (SE),
les valeurs (X) de la composante axiale (Bx), les valeurs (Y) de la composante radiale (By), la pente (Bxdx) de la composante axiale (Bx), la pente (Bydx) de la composante radiale (By) et le résultat de soustraction (SE) sont pondérés chacun avec un facteur de pondération (G) différent,
le facteur de pondération (G) correspond en particulier à une puissance de deux,
l'unité d'évaluation (9) est réalisée pour additionner les facteurs de pondération (G) des valeurs (X) de la composante axiale (Bx), les valeurs (Y) de la composante radiale (By), la pente (Bxdx) de la composante axiale (Bx), la pente (Bydx) de la composante radiale (By) et le résultat de soustraction (SE) d'une zone (14) respective, pour former une somme de facteurs de pondération (GS) respective,
l'unité d'évaluation (9) est réalisée pour déterminer la polarité (P) de l'aimant transmetteur (2) à partir de la somme de facteurs de pondération (GS),
à la base des sommes de facteurs de pondération (GS) déterminées, l'unité d'évaluation (9) est réalisée pour corriger par une valeur de correction constante (21) le signal de position (10) dans au moins une zone (14) du trajet de mesure (3), de sorte qu'il se forme un signal de position monotone (10) avec une plage de valeurs monotone (12) sur tout le trajet de mesure (3).

2. Capteur selon la revendication 1, **caractérisé en ce que** l'élément capteur (4) est un capteur d'angle basé sur une technologie TMR.

3. Capteur selon l'une au moins des revendications précédentes, **caractérisé en ce que** l'élément capteur (4) est un composant intégré ayant au moins une sortie analogique (24), et l'unité d'évaluation (9) est un microcontrôleur qui comprend un convertisseur analogique/numérique intégré, moyennant quoi ledit au moins un signal analogique à la sortie analogique (24) est susceptible d'être traité par voie numérique avec les valeurs pour la composante axiale et pour la composante radiale dans l'unité d'évaluation (9).

4. Capteur selon l'une des revendications précédentes, **caractérisé en ce que** l'unité d'évaluation (9) est réalisée pour subdiviser le trajet de mesure en au moins quatre zones (14), les limites (25) des zones se situant au niveau des discontinuités respectives de la plage de valeurs d'ARCTAN et à l'emplacement auquel le signal de position (10) présente la plus grande pente.

5. Capteur selon l'une des revendications précédentes, **caractérisé en ce que** l'unité d'évaluation (9) est réalisée pour détecter une pente des valeurs de la composante axiale (Bx) et/ou une pente des valeurs de la composante radiale (By) dans chaque zone.

6. Capteur selon l'une des revendications précédentes, **caractérisé en ce que** l'unité d'évaluation est réalisée pour évaluer une modification de la première composante et une modification de la seconde composante pour former un vecteur de vitesse ou un taux de modification.

7. Capteur selon l'une des revendications précédentes, **caractérisé en ce que** l'unité d'évaluation est réalisée pour former une première déduction d'ARCTAN (composante radiale/composante axiale) ou une première déduction d'ARCTAN (composante axiale/composante radiale) ou une seconde déduction d'ARCTAN (composante radiale/composante axiale) ou une seconde déduction d'ARCTAN (composante axiale/composante radiale), permettant de déterminer une polarité d'un aimant pour une direction de magnétisation donnée.

8. Capteur selon l'une des revendications précédentes, **caractérisé en ce que** l'unité d'évaluation est réalisée pour former le montant de la composante axiale (|Bx|) et le montant de la composante radiale (|By|) et pour soustraire les montants (|Bx| - |By|) pour obtenir un résultat de soustraction (SE), permettant de déterminer une polarité d'un aimant pour une direction de magnétisation donnée.

9. Capteur selon l'une des revendications précédentes, **caractérisé en ce que** au moins deux éléments capteurs (4) sont agencés l'un derrière l'autre le long du trajet de mesure (3).
